# EUROPÄISCHE PATENTSCHRIFT

(11) **EP 2 566 733 B1**
(45) Veröffentlichungstag und Bekanntmachung des Hinweises auf die Patenterteilung: **08.04.2015**
(21) Anmeldenummer: 11718068.7
(22) Anmeldetag: 04.05.2011
(51) Int. Cl.: B60T 17/00, B60T 13/68, B60T 17/22

(54) **VORRICHTUNG ZUM STEUERN EINER ELEKTRO-PNEUMATISCHEN BREMSEINRICHTUNG**
DEVICE FOR CONTROLLING AN ELECTRO-PNEUMATIC BRAKE DEVICE
DISPOSITIF DE COMMANDE D'UN DISPOSITIF DE FREINAGE ÉLECTROPNEUMATIQUE

(30) Priorität: 11.05.2010 DE 102010020266; 06.05.2010 DE 102010019810
(43) Veröffentlichungstag der Anmeldung: 13.03.2013
(73) Patentinhaber: KNORR-BREMSE Systeme für Nutzfahrzeuge GmbH, 80809 München (DE)
(72) Erfinder: HERGES, Michael, 80935 München (DE); MUSTAPHA, Adnan, 75433 Maulbronn (DE); JUNQUEIRA DA FONSECA, Braulio, 85391 Allershausen (DE); CADEDDU, Raoul, 80809 München (DE)
(74) Vertreter: Schönmann, Kurt
(86) Internationale Anmeldenummer: PCT/EP2011/057108
(87) Internationale Veröffentlichungsnummer: WO 2011/138358

(56) Entgegenhaltungen:
- EP-A1- 1 529 704
- EP-A1- 1 731 335

## Beschreibung

Die Erfindung betrifft eine Vorrichtung zum Steuern einer elektropneumatischen Bremseinrichtung gemäß dem Oberbegriff von Anspruch 1.

Dokument EP-A-1529704 offenbart eine gattungsgemäße Vorrichtung.

Nutzfahrzeuge verfügen oftmals über eine große Anzahl von Druckluft verbrauchenden Teilsystemen, wie zum Beispiel einer druckluftbetriebenen Betriebsbremse, einer Luftfederung oder einer pneumatischen Getriebesteuerung. Zur Versorgung dieser Teilsysteme mit Druckluft ist in dem Nutzfahrzeug üblicherweise eine Druckluftversorgungs- und Regenerierungseinrichtung mit integriertem Lufttrockner vorgesehen. Die Druckluftversorgungs- und Regenerierungseinrichtung erzeugt und verteilt Druckluft, die in dem Lufttrockner zunächst von Öl- und Schmutzpartikeln befreit und anschließend getrocknet wird. Diese Aufbereitung der Druckluft ist notwendig, da ansonsten die in der Druckluft vorhandene Luftfeuchtigkeit und die Öl- und Schmutzpartikel einen erhöhten Verscheiß der angeschlossenen mit Druckluft versorgten Teilsysteme verursachen würden. Insbesondere das in dem Lufttrockner vorhandene Trockenmittel muss, um eine gleich bleibende Trocknungswirkung zu erzielen, durch ein Regenerationsverfahren von der gespeicherten Feuchtigkeit befreit werden, wenn die Aufnahmekapazität des Trockenmittels erschöpft ist. Eine Möglichkeit ein solches Regenerationsverfahren einzuleiten besteht darin, bei Erreichen eines vorgebbaren Druckniveaus automatisch eine Regenerationsphase einzuleiten, wobei die Regenerationsluft beispielsweise aus den Betriebsbremskreisen durch den Lufttrockner rückströmt und über ein Ablassventil entweicht. Eine gattungsgemäße Vorrichtung zum Steuern einer elektro-pneumatischen Bremseinrichtung ist beispielsweise aus der DE 60 2004 010 988 T2 bekannt. Dort ist ein Kompressor vorhanden, welcher Atmosphärenluft aufnimmt, als Druckluft verdichtet und einer Druckluftversorgungs- und Regenerierungseinrichtung mit integriertem Lufttrockner zuführt, welche diese Druckluft empfängt und wenigstens an mindestens einen Betriebsbremskreis weiterleitet, wobei wenigstens folgende Phasen vorgesehen sind:
a) Eine Lastphase, die aufrechterhalten wird, bis der Druck der Druckluft einen oberen Abschaltdruck erreicht hat,
b) eine Regenerierungsphase zum Entfeuchten des Lufttrockners,
c) eine Entlastungsphase, die aufrechterhalten wird, bis der Druck der Druckluft unter einen unteren Einschaltdruck gefallen ist.

Weiterhin sind in einem elektronischen Steuergerät implementierte Steuerroutinen zur Steuerung zur Steuerung der Last-, Regenerierungs- und Entlastungsphase durch eine elektromagnetische Ventileinrichtung vorgesehen.

Diese elektromagnetische Ventileinrichtung umfasst im Allgemeinen ein elektromagnetisches Ablasssteuerventil zur Steuerung eines Ablassventils sowie ein elektromagnetisches Regenerationsventil, wobei während der Regenerationsphase das Regenerationsventil und gleichzeitig oder in kurzem zeitlichen Abstand auch das Ablasssteuerventil jeweils bestromt werden, um die zur Regeneration eines Lufttrockners benötigte Luft aus den Betriebsbremskreisen durch den Lufttrockner strömen zu lassen. Dabei nimmt die Regenerationsluft in dem Lufttrockner gespeicherte Öl- und Schmutzpartikel sowie Feuchtigkeit auf und entfernt sie über das Ablassventil aus dem System.

Falls das Steuergerät oder die weitere Elektrik eine Störung derart aufweisen sollten, dass das Ablassteuerventil und das Regenerationsventil dauerhaft bestromt werden, so werden auch die Betriebsbremskreise dauerhaft entlüftet, was zu einem unerwünschten und gefährlichen Bremsversagen führen würde. Der Erfindung liegt demgegenüber die Aufgabe zugrunde, eine Vorrichtung zur Steuerung einer elektro-pneumatischen Bremseinrichtung der eingangs erwähnten Art derart fortzubilden, dass für die Bremseinrichtung eine höhere Ausfallsicherheit mit möglichst wenig Aufwand erzielt wird.

### Offenbarung der Erfindung

Der Erfindung liegt der Gedanke zugrunde, dass das Bremssteuergerät wenigstens zwei sich gegenseitig überwachende Mikroprozessoren enthält und dass die Steuerroutinen zur Steuerung der Last-, Regenerierungs- und Entlastungsphase in einem Bremssteuergerät der elektro-pneumatischen Bremseinrichtung implementiert werden. Wegen der in dem Bremssteuergerät vorhandenen zumindest zwei sich gegenseitig überwachenden Mikroprozessoren kann dann verhindert werden, dass durch eine eventuell Fehlfunktion eines der Mikroprozessoren die Druckluftversorgungs- und Regulierungseinrichtung sicherheitsgefährdende Zustände annimmt. Bremssteuergeräte üblicher elektro-pneumatischer Bremseinrichtungen weisen üblicherweise zumindest zwei sich gegenseitig überwachende Mikroprozessoren auf, so dass keine zusätzliche Hardware zur Realisierung der Erfindung notwendig ist.

Da der sichere Betrieb der Druckluftversorgungs- und Regulierungseinrichtung für die Funktion der Bremsanlage Voraussetzung ist, ergäbe sich eine zusätzliche Fehlermöglich für die Funktion der Bremsanlage, wenn die Steuerung der Druckluftversorgungs- und Regulierungseinrichtung von einem anderen elektronischen Steuergerät ausgeführt würde.

Die Erfindung erhöht also sowohl die Sicherheit, als auch die Verfügbarkeit der Bremsanlage.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform ist durch die in dem Bremssteuergerät implementierten Steuerroutinen abhängig von Betriebszuständen des Fahrzeugs die Last-, Regenerierungs- und Entlastungsphase steuerbar und/oder der untere Einschaltdruck und/oder der obere Abschaltdruck anpassbar, wobei der jeweils vorliegende Betriebszustand durch dem Bremssteuergerät im Rahmen der Bremsfunktion zugeordnete Sensoren wie Bremsdrucksensoren, Raddrehzahlsensoren, Motordrehzahlsensor etc. detektierbar ist.

Unter der Steuerbarkeit der die Last, Regenerierungs- und Entlastungsphase sind insbesondere die Zeitpunkte zu verstehen, an welchen die entsprechende Phase gestartet wird bzw. endet oder auch die Zeitdauer, während der die betreffende Phase aktiv bzw. inaktiv ist.

Unter den dem Bremssteuergerät im Rahmen der jeweiligen Bremsfunktion zugeordneten Sensoren sind Sensoren zu verstehen, welche Messgrößen wie Drücke, Zeitpunkte, Drehzahlen etc. aufnehmen, wie sie zur Durchführung einer Bremsfunktion (z.B. ABS, Bremsdruckregelung im Rahmen eines elektronischen Bremssystems, Antriebsschlupfregelung, ACC) in dem Bremssteuergerät benötigt werden.

Daher können die Signale der dem Bremssteuergerät zur Ausführung von Bremsfunktionen wie ABS, Bremsdruckregelung etc. ohnehin zugeordneten Sensoren zugleich zur Steuerung der Druckluftversorgungs- und Regenerierungseinrichtung genutzt werden, ohne dass hierfür eine eigene Datenübermittlung zwischen separaten Steuergeräten stattfinden müsste. Denn die Daten von Sensoren, die dem Bremssystem Daten zur Ausführung von Bremsfunktionen im weitesten Sinne liefern, wie beispielsweise zur Ausführung bremsschlupfgeregelter oder bremsdruckgeregelter Bremsungen, sind bereits in einem Speicher des Bremsteuergeräts vorhanden und können dann dort im Sinne einer Mehrfachnutzung direkt zur Steuerung der Druckluftversorgungs- und Regenerationseinrichtung genutzt werden.

Durch diese Maßnahmen vereinfacht sich daher der Aufbau einer Vorrichtung zur Steuerung einer elektro-pneumatischen Bremseinrichtung.

Wenn dann beispielsweise die elektro-pneumatische Bremseinrichtung eine Bremsschlupfregelung (ABS) umfasst, ist das Bremssteuergerät ein ABS-Bremssteuergerät und ausgebildet, um von Sensoren des ABS-Bremssystems Daten hinsichtlich einer Aktivierung der Bremsschlupfregelung (ABS) während eines Bremsvorgangs wie ABS-Steuerventilaktivitäten, ABS-Regelfrequenz, Schätzung des Reibwerts zwischen Fahrbahn und Rad etc. zu empfangen und abhängig von diesen Daten die Last-, Regenerierungs- und Entlastungsphase und/oder die Anpassung des unteren Einschaltdrucks und des oberen Abschaltdrucks zu steuern.

Beispielsweise sind die im Bremsteuergerät implementierten Steuerroutinen ausgebildet, um während eines Bremsschlupfregelvorgangs die Regenerierungsphase abzubrechen oder zu unterbrechen. Denn während eines Bremsschlupfregelvorgangs wird in der Regel eine relativ große Druckluftmenge benötigt, wobei aber während der Regenerierungsphase Druckluft aus den Betriebsbremskreisen abgezogen wird.

Aufgrund des während einer A B S-Regelvorgangs erhöhten Druckluftverbrauchs wird insbesondere die Last- oder Förderphase wie oben beschrieben gestartet und der obere Abschaltdruck ausgehend von einem Ausgangswert erhöht, so dass die Zeitdauer der Last- oder Förderphase verlängert wird, da diese erst dann beendet wird, wenn der Druck den oberen Abschaltdruck erreicht hat. Der Ausgangswert des oberen Abschaltdrucks kann dabei beispielsweise ein voreingestellter Wert sein, wie er durch Versuche ermittelt wurde. Vorzugsweise erst nach Beendigung des Bremsschlupfregelvorgangs wird dann die Regenerierungsphase eingeleitet oder fortgesetzt.

Die elektro-pneumatische Bremseinrichtung kann gemäß einer weiteren Ausführungsform auch ein elektronisches Bremssystem (EBS) mit einer Bremsdruckregelung sein. In diesem Falle ist das Bremssteuergerät ein EBS-Bremssteuergerät und ausgebildet, um von Sensoren des EBS-Bremsystems Daten hinsichtlich einer Aktivierung des elektronischen Bremssystems (EBS) zu empfangen.

Die in dem Bremssteuergerät implementierten Steuerroutinen sind dann bevorzugt ausgebildet, um während eines Bremsvorgangs die oben beschriebene Lastphase zu starten und den oberen Abschaltdruck ausgehend von einem Ausgangswert zu erhöhen, da während eines solchen Bremsvorgangs ein erhöhter Druckluftbedarf besteht. Wenn dann der erhöhte obere Abschaltdruck erreicht ist und der Bremsvorgang noch andauert, wird bevorzugt die Regenerierungsphase gestartet, beispielsweise während des Schiebebetriebs oder während einer Bergabfahrt. Anschließend kann dann wieder die Last- oder Förderphase gestartet werden.

Die elektro-pneumatische Bremseinrichtung kann gemäß einer weiteren Ausführungsform mit einem Fahrerassistenzsystem wie ACC (Adaptive Cruise Control) zusammen wirken. Dann sind die in dem Bremssteuergerät implementierten Steuerroutinen beispielsweise ausgebildet, um die Regenerierungsphase abzubrechen, die Lastphase zu starten und den Abschaltdruck ausgehend von einem Ausgangswert zu erhöhen, falls durch das Fahrerassistenzsystem eine Gefahrensituation detektiert und der elektropneumatischen Bremseinrichtung gemeldet wird. Denn auch in diesem Fall ist ein erhöhter Druckluftbedarf vorhanden.

Mit der erfindungsgemäßen Vorrichtung wird folglich eine "intelligente" Steuerung einer Druckluftversorgungs- und Renegerierungseinrichtung verwirklicht, die dann ein erhöhtes Druckluftangebot (Last- oder Förderphase) liefert, wenn ein solches benötigt wird, und zugleich unnötige oder zur Unzeit stattfindende Regenerationsphasen vermeidet.

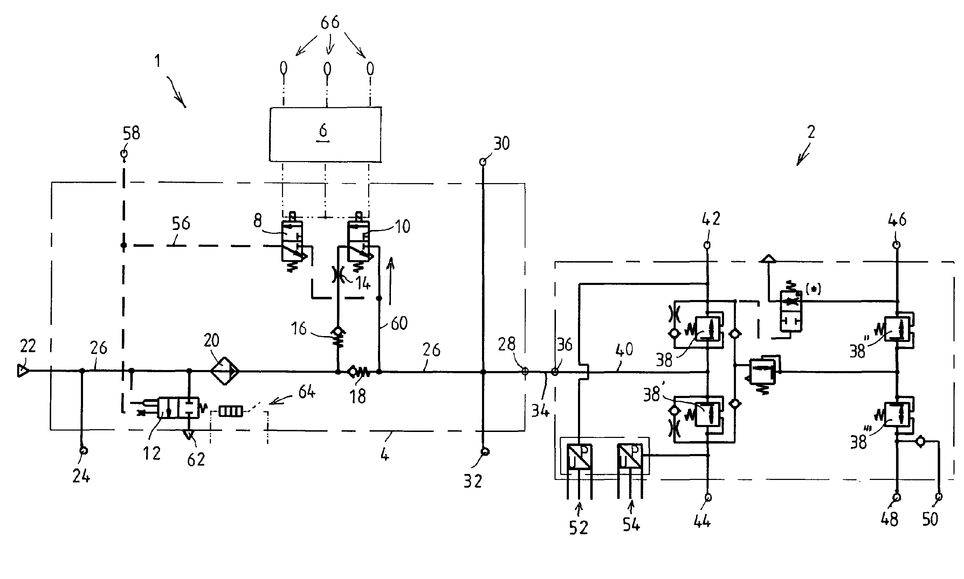

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt die einzige Figur einen schematischen Schaltplan einer mit einem Mehrkreisschutzventil zusammen wirkenden Druckluftversorgungs- und Regenerierungseinrichtung gemäß einer bevorzugten Ausführungsform der Erfindung.

### Beschreibung des Ausführungsbeispiels

Die Figur zeigt eine Druckluftversorgungs- und Regenerierungseinrichtung 1 einer elektro-pneumatischen Bremsanlage eines für einen Anhängerbetrieb ausgerüsteten Nutzfahrzeugs mit angeschlossenem Mehrkreisschutzventil 2. Die Bauelemente der Druckluftversorgungs- und Regenerierungseinrichtung 1 sind bevorzugt, wie durch die strichpunktierte Linie angedeutet, in einem Gehäuse 4 angeordnet. Im Inneren der Druckluftversorgungs- und Regenerierungseinrichtung 1 angeordnete pneumatische Leitungen sind als durchgezogene Linien dargestellt, pneumatische Steuerleitungen sind als gestrichelte Linien dargestellt und elektrische Leitungen als doppelt gepunktet gestrichelte Linien eingezeichnet.

Die dargestellte Druckluftversorgungs- und Regenerierungseinrichtung 1 beinhaltet von einem elektronischen Steuergerät 6 elektrisch ansteuerbare Magnetventile 8 und 10, nämlich ein Ablasssteuerventil 8 und ein Regenerationssteuerventil 10 jeweils als 3/2-Wege-Magnetventil, ein vom Ablasssteuerventil 8 pneumatisch steuerbares Ablassventil 12, eine Drossel 14, Rückschlagventile 16 und 18 sowie einen Lufttrockner 20 mit Filtereinsatz. Das elektronische Steuergerät 6 ist bevorzugt nicht in dem Gehäuse 4 der Druckluftversorgungs- und Regenerierungseinrichtung 1 integriert.

Die Druckluftversorgungs- und Regenerierungseinrichtung 1 kann über einen Drucklufteingang 20 durch einen hier nicht dargestellten Kompressor oder einen Fremdbelüftungseingang 24 mit Druckluft versorgt werden. Die der Druckluftversorgungs- und Regenerierungseinrichtung 1 zugeführte Druckluft wird über eine mit den Eingängen 20, 24 verbundene Versorgungsleitung 26 zunächst in dem Lufttrockner 20 aufbereitet, das heißt insbesondere von Öl- und Schmutzteilchen sowie von Luftfeuchtigkeit gereinigt. Die so aufbereitete Druckluft wird dann über das Rückschlagventil 18 und die weiter geführte Versorgungsleitung 26 an einen (Ausgangs-) Anschluss 28 weiter geführt, welcher mit einem (Eingangs-) Anschluss 36 des Mehrkreisschutzventils 2 verbunden ist. An die Versorgungsleitung 26 sind außerdem beispielsweise Reifenfüllanschlüsse 30, 32 für ein Reifendrucküberwachungssystem angeschlossen.

Eine Verbindungsleitung 34 führt dann vom Anschluss 28 der Druckluftversorgungs- und Regenerierungseinrichtung 1 zum Anschluss 36 des Mehrkreisschutzventils 2. Dieses beinhaltet als integrale Bestandteile hier nicht interessierende Überströmventile 38, 38', 38" und 38"', welche an eine vom Anschluss 36 geführte zentrale Versorgungsleitung 40 angeschlossen sind. Ausgangsseitig stehen die Überströmventile 38, 38', 38" und 38"' mit Kreisanschlüssen 42, 44, 46, 48, 50 in Verbindung, von denen beispielsweise die Kreisanschlüsse 42 und 44 zu je einem Druckmittelvorrat je eines Betriebsbremskreises (z.B. Vorderachs- und Hinterachsbetriebsbremskreis), der Kreisanschluss 46 zu einem Druckmittelvorrat einer Luftfederung, der Kreisanschluss 48 zu einem Druckmittelvorrat eines Anhängers und der Kreisanschluss 50 zu einem Druckmittelvorrat einer Parkbremse des Nutzfahrzeugs führen. Dabei stehen die Kreisanschlüsse 42, 44 für die beiden Betriebsbremskreise mit jeweils einem zugeordneten Drucksensor 52, 54 in Verbindung, um den jeweiligen Kreisdruck zu messen.

Ein Steueranschluss des Ablassventils 12 wie auch ein Kompressorsteuerausgang 58 ist durch eine vom Ablasssteuerventil 8 herangeführte pneumatische Steuerleitung 56 durch Be- bzw. Entlüften abhängig vom Schaltzustand des Ablasssteuerventils 8 steuerbar.

Das Steuergerät 6 ist ausgebildet, um das Regenerationsventil 10 und das Ablasssteuerventil 8 unter anderem abhängig von Betriebsbedingungen des Nutzfahrzeugs anzusteuern, wobei im entstromten Zustand die in der Figur gezeigten Schaltstellungen eingenommen werden, bei welchen die pneumatische Steuerleitung 56 von dem Ablasssteuerventil 8 und ein Teil einer das Rückschlagventil 18 umgehenden Bypassleitung 60 von dem Regenerationsventil 10 jeweils mit einer Entlüftung verbunden sind. Im bestromten Zustand nehmen diese Magnetventile 8, 10 dagegen ihre nicht dargestellten Schaltstellungen ein, in welchen die Bypassleitung 60 von dem Regenerationsventil 10 durchgeschaltet und damit das Rückschlagventil 18 umgangen und das Ablasssteuerventil 8 die Versorgungsleitung 26 mit der pneumatischen Steuerleitung 56 verbindet.

Das Ablassventil 12 ist ein vom Druck in der pneumatischen Steuerleitung 56 gesteuertes 2/2-Wegeventil, wobei bei belüftetem Steueranschluss die Versorgungsleitung 26 mit einer Entlüftung 62 und bei entlüftetem Steueranschluss diese Verbindung unterbrochen wird. Das Ablassventil 12 ist stromaufwärts des Lufttrockners 20 in der Versorgungsleitung 26 angeordnet.

Stromabwärts des Lufttrockners 20 zweigt die Bypassleitung 60 von der Versorgungsleitung 26 ab, über die das Ablasssteuerventil 8 mit Druckluft versorgt wird, stromaufwärts des Lufttrockners 20 mündet die Bypassleitung 60 in die Versorgungsleitung 26. Die das Rückschlagventil 18 überbrückende Druckluftströmung hat bei durchgeschaltetem Regenerationsventil 10 dann die durch den Pfeil gekennzeichnete Richtung.

Das Ablasssteuerventil 8 wird vom Steuergerät 92 elektrisch angesteuert, über die pneumatische Steuerleitung 56 den Kompressorsteuerausgang 58 und auch den pneumatischen Steueranschluss des Ablassventils 12 mit Druck zu beaufschlagen oder diese Druckverbindung zu sperren. Dem Lufttrockner 20 kann auch eine Heizung 64 zugeordnet sein, die insbesondere ein Vereisen der Versorgungsleitung 26 verhindern soll.

Im Folgenden wird die Funktionsweise der Druckluftversorgungs- und Regenerierungseinrichtung 1 erläutert.

Während der Last- oder Förderphase wird über den Drucklufteingang 22 und die Versorgungsleitung 26 die vom Kompressor geförderte Druckluft zum Lufttrockner 20 befördert. Stromabwärts des Lufttrockners 20 wird die in dem Lufttrockner 20 aufbereitete Druckluft dann über die Versorgungsleitung 26 dem Mehrkreisschutzventil 2 zugeführt. Diese Last- oder Förderphase wird solange aufrechterhalten, bis der von den Sensoren 52, 54 der Betriebsbremskreise detektierbare Druck auf der Ausgangsseite der Druckluftversorgungs- und Regenerierungseinrichtung 1 einen oberen Abschaltdruck übersteigt.

Übersteigt das Druckniveau stromabwärts des Rückschlagventils 18 einen oberen Abschaltdruck, was von den den Kreisanschlüssen 42, 44 der Betriebsbremskreise zugeordneten Drucksensoren 52, 54 detektiert wird, so wird das Ablasssteuerventil 8 vom Steuergerät 6 durch Bestromen in seinen nicht dargestellten Schaltzustand geschaltet, in welchem gleichzeitig der Kompressorsteuerausgang 58 und das Ablassventil 12 steuerseitig mit dem Druck in der Versorgungsleitung 26 beaufschlagt werden. Dadurch wird sowohl der Kompressor in einen energiesparenden Betriebsmodus versetzt als auch das Ablassventil 12 in seinen nicht dargestellten Schaltzustand (Durchlassstellung) überführt. Nunmehr ist die Versorgungsleitung 26 über das Ablassventil 12 mit der Entlüftung 62 gekoppelt und die Regenerationsluft kann aus den Kreisanschlüssen 42, 44 der Betriebsbremskreise über den Lufttrockner 20 durch das Ablassventil 12 und die Entlüftung 62 rückströmen, wobei ein in dem Lufttrockner 20 angeordnetes Trockenmittel regeneriert wird.

Während der vom Steuergerät 6 eingeleiteten Regenerationsphase werden daher das Regenerationsventil 10 und gleichzeitig oder in kurzem zeitlichen Abstand auch das Ablasssteuerventil 8 jeweils in ihre nicht dargestellten Schaltzustände durch Bestromen überführt. Durch das Überführen des Ablasssteuerventils 8 in seinen nicht dargestellten Schaltzustand wird die pneumatische Steuerleitung 56 und dadurch auch der Kompressorsteuerausgang 58 durch die in der Versorgungsleitung 26 anstehende Druckluft belüftet und das Ablassventil 12 durch Belüften eines Steueranschlusses ebenfalls in seinen nicht dargestellten Schaltzustand gebracht, so dass der nicht dargestellte, am Kompressorsteuerausgang 44 angeschlossene Kompressor in seine Leerlaufphase überführt wird. Da das Ablassventil 58 durch Belüftung seines Steueranschlusses dann in seine Durchlassstellung geschaltet ist, kann die zur Regeneration benötigte Luft von den Kreisanschlüssen 42, 44 der beiden Betriebsbremskreise über die Versorgungsleitung 40, die Verbindungsleitung 34, die Versorgungsleitung 26, die Bypassleitung 60, das Regenerationsventil 10, die Drossel 52, das Rückschlagventil 16, das heißt unter Umgehung des Rückschlagventils 18 durch den Lufttrockner 20 und das Ablassventil 12 zur Entlüftung 62 strömen, an der sie das Druckluftsystem verlässt. Dabei nimmt die Regenerationsluft in dem Lufttrockner 20 gespeicherte Öl- und Schmutzpartikel sowie Feuchtigkeit auf und entfernt sie aus dem System.

Während einer Entlastungsphase, die anhält, bis der von den Sensoren 52, 54 detektierbare Druck auf der Ausgangsseite der Druckluftversorgungs- und Regenerierungseinrichtung 1 unter einen unteren Einschaltdruck gefallen ist, schaltet das Steuergerät 6 durch alleiniges Bestromen des Ablasssteuerventils 8 den Druck in der Versorgungsleitung 26 auf die pneumatische Steuerleitung 56, so dass der Kompressorsteuerausgang 44 belüftet und somit der Kompressor in seine Leerlaufphase überführt wird.

Umgekehrt, d.h., wenn das Ablasssteuerventil 8 nicht vom Steuergerät 6 bestromt wird, stellt sich der in der Figur gezeigte Schaltzustand ein, in welchem die pneumatische Steuerleitung 56 und damit der Kompressorsteuerausgang 58 entlüftet sind, wodurch der Kompressor in seine Last- oder Förderphase geschaltet wird.

Falls das Steuergerät 6 oder die weitere Elektrik eine Störung derart aufweisen sollten, dass das Ablassteuerventil 8 und das Regenerationsventil 10 dauerhaft bestromt werden, so werden auch die Kreisanschlüsse 42, 44 der beiden Betriebsbremskreise dauerhaft entlüftet, was zu einem unerwünschten und gefährlichen Bremsversagen führen kann.

Deshalb sind die Steuerroutinen zur Steuerung zur Steuerung der Last-, Regenerierungs- und Entlastungsphase in einem Bremssteuergerät 6 der elektro-pneumatischen Bremsanlage implementiert. Denn ein solches Bremssteuergerät 6 verfügt in der Regel über zwei Mikroprozessoren, so d a s s bei einer Fehlfunktion eines Mikroprozessors der weitere Mikroprozessor dies erkennt, eine entsprechende Warnung ausgibt und die Magnetventile in einen sicheren Zustand schaltet oder die Steuerroutinen der Druckluftversorgungs- und Regulierungseinrichtung 1 übernehmen kann. Durch die in dem Bremssteuergerät 6 implementierten Steuerroutinen sind insbesondere abhängig von Betriebszuständen des Fahrzeugs die Last-, Regenerierungs- und Entlastungsphase steuerbar und/oder der untere Einschaltdruck und/oder der obere Abschaltdruck anpassbar, wobei der jeweils vorliegende Betriebszustand durch dem Bremssteuergerät 6 im Rahmen der Bremsfunktion zugeordnete Sensoren 66 wie Bremsdrucksensoren, Raddrehzahlsensoren, Motordrehzahlsensor etc. detektierbar ist.

Gemäß einer bevorzugten Ausführungsform umfasst die elektro-pneumatische Bremseinrichtung eine Bremsschlupfregelung (ABS), wobei dann das Bremssteuergerät 6 ein ABS-Bremssteuergerät und ausgebildet ist, um von Sensoren Daten hinsichtlich einer Aktivierung der Bremsschlupfregelung (ABS) während eines Bremsvorgangs wie ABS-Steuerventilaktivitäten, ABS-Regelfrequenz, Schätzung des Reibwerts zwischen Fahrbahn und Rad zu empfangen und abhängig von diesen Daten die Last-, Regenerierungs- und Entlastungsphase sowie die Anpassung des unteren Einschaltdrucks und des oberen Abschaltdrucks zu steuern.

Beispielsweise sind die im Bremsteuergerät 6 implementierten Steuerroutinen ausgebildet, um während eines Bremsschlupfregelvorgangs die Regenerierungsphase abzubrechen oder zu unterbrechen. Denn während eines Bremsschlupfregelvorgangs wird in der Regel eine relativ große Druckluftmenge benötigt, wobei aber während der Regenerierungsphase Druckluft aus den Betriebsbremskreisen abgezogen wird.

Aufgrund des während einer ABS-Regelvorgangs erhöhten Druckluftverbrauchs wird insbesondere die Last- oder Förderphase wie oben beschrieben gestartet und der obere Abschaltdruck ausgehend von einem Ausgangswert erhöht, so dass die Zeitdauer der Last- oder Förderphase verlängert wird, da diese erst dann beendet wird, wenn der Druck den oberen Abschaltdruck erreicht hat. Der Ausgangswert des oberen Abschaltdrucks kann dabei beispielsweise ein voreingestellter Wert sein, wie er durch Versuche ermittelt wurde. Vorzugsweise erst nach Beendigung des Bremsschlupfregelvorgangs wird dann die Regenerierungsphase eingeleitet oder fortgesetzt.

Die elektro-pneumatische Bremseinrichtung kann gemäß einer weiteren Ausführungsform auch ein elektronisches Bremssystem (EBS) mit einer Bremsdruckregelung sein. In diesem Falle ist das Bremssteuergerät 6 ein EBS-Bremssteuergerät und ausgebildet, um von Sensoren Daten hinsichtlich einer Aktivierung des elektronischen Bremssystems (EBS) zu empfangen. Die in dem Bremssteuergerät 6 implementierten Steuerroutinen sind dann bevorzugt ausgebildet sind, um während eines Bremsvorgangs die oben beschriebene Lastphase zu starten und den oberen Abschaltdruck ausgehend von einem Ausgangswert zu erhöhen, da während eines solchen Bremsvorgangs ein erhöhter Druckluftbedarf besteht. Wenn dann der erhöhte obere Abschaltdruck erreicht ist und der Bremsvorgang noch andauert, wird bevorzugt die Regenerierungsphase gestartet, beispielsweise während des Schiebebetriebs oder während einer Bergabfahrt. Anschließend kann dann wieder die Last- oder Förderphase gestartet werden.

Die elektro-pneumatische Bremseinrichtung kann gemäß einer weiteren Ausführungsform mit einem Fahrerassistenzsystem wie ACC (Adaptive Cruise Control) zusammen wirken. Dann sind die in dem Bremssteuergerät 6 implementierten Steuerroutinen beispielsweise ausgebildet, um die Regenerierungsphase abzubrechen, die Lastphase zu starten und den Abschaltdruck ausgehend von einem Ausgangswert zu erhöhen, falls durch das Fahrerassistenzsystem eine Gefahrensituation detektiert und der elektro-pneumatischen Bremseinrichtung gemeldet wird. Denn auch in diesem Fall ist ein erhöhter Druckluftbedarf vorhanden.

Falls das Bremssteuergerät 6 der elektro-pneumatischen Bremseinrichtung eine geringe Druckluftanforderung repräsentierende Signale erhält, was ihm durch die Bremsdrucksensoren des EBS-Bremssystems bzw. die Raddrehzahlsensoren des ABS-Bremssystems gemeldet wird, veranlasst das Bremssteuergerät 6, dass das Ablasssteuerventil 8 bestromt wird, um über das dann durchgeschaltete Ablassventil 12 die Versorgungsleitung 26 zu entlüften, was einen Druckabfall in der Versorgungsleitung 26 zur Folge hat. Wenn dann der Druck unter den unteren Einschaltdruck gefallen ist, was die Drucksensoren 52, 54 dem Bremssteuergerät 6 melden, wird der Kompressor in seine Last- oder Förderphase geschaltet, um die Druckmittelvorräte der verschiedenen Kreise zu füllen.

Falls bei stehenden Fahrzeug ein erhöhter Druckluftverbrauch benötigt wird, beispielsweise, um das Chassis durch die Luftfederung auf ein höheres Niveau zum Be- und Entladen zu bringen, so kann das ABS- oder EBS-Bremssystem diesen Betriebszustand durch die im CAN geführten Drucksignale und die Motordrehzahl erkennen und beispielsweise den oberen Abschaltdruck erhöhen.

Um die Belastung für den Anlasser der Antriebsmaschine des Nutzfahrzeugs zu reduzieren, kann während es Anlassvorgangs die Entlastungsphase des Kompressors bzw. der Druckluftversorgungs- und Renegerierungseinrichtung eingestellt werden.

Demgegenüber kann, wenn die Antriebsmaschine bzw. deren Zündung ausgeschaltet wird, das Bremsteuergerät 6 eine letzte Regenerationsphase veranlassen, um das Nutzfahrzeug mit einem regenerierten Lufttrockner in einer Parkposition abzustellen. Weiterhin wird dann auch die Versorgungsleitung 26 durch das in Durchlassstellung geschaltete Ablassventil 12 entlüftet, so dass innerhalb der Versorgungsleitung 26 keine Vereisungsgefahr besteht.

Nicht zuletzt können Daten über die im Betrieb aufgetretenen Last-, Regenerations- und Entlastungsphasen der Druckluftversorgungs- und Regenerierungseinrichtung 1 aufgezeichnet und in einem Speicher des Bremssteuergeräts abgespeichert werden, um beispielsweise einen übermäßigen Druckluftverbrauch oder auch einen verschlissenen Filtereinsatz des Lufttrockners feststellen zu können. Für diese Fälle könnte dann jeweils eine auslesbare Fehlermeldung erzeugt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezuaszeichenliste

- 1: Druckluftversorgungs- und Regenerierungseinrichtung
- 2: Mehrkreisschutzventil
- 4: Gehäuse
- 6: Steuergerät
- 8: Ablasssteuerventil
- 10: Regenerationsventil
- 12: Ablassventil
- 14: Drossel
- 16: Rückschlagventil
- 18: Rückschlagventil
- 20: Lufttrockner
- 22: Drucklufteingang
- 24: Fremdbelüftungseingang
- 26: Versorgungsleitung
- 28: Anschluss
- 30: Reifenfüllanschluss
- 32: Reifenfüllanschluss
- 34: Verbindungsleitung
- 36: Anschluss
- 38: Überströmventile
- 40: Versorgungsleitung
- 42: Kreisanschluss
- 44: Kreisanschluss
- 46: Kreisanschluss
- 48: Kreisanschluss
- 50: Kreisanschluss
- 52: Drucksensor
- 54: Drucksensor
- 56: Steuerleitung
- 58: Kompressorsteuerausgang
- 60: Bypassleitung
- 62: Entlüftung
- 64: Heizung
- 66: Sensoren

## Patentansprüche

1. Vorrichtung zum Steuern einer elektro-pneumatischen Bremseinrichtung mit einem Bremssteuergerät (6) sowie mit einem Kompressor, welcher Atmosphärenluft aufnimmt, als Druckluft verdichtet und einer Druckluftversorgungs- und Regenerierungseinrichtung (1) mit einem Lufttrockner (20) zuführt, welche diese Druckluft empfängt und wenigstens an mindestens einen Betriebsbremskreis weiterleitet, wobei wenigstens folgende Phasen vorgesehen sind:
a) Eine Lastphase, die aufrechterhalten wird, bis der Druck der Druckluft einen oberen Abschaltdruck erreicht hat,
b) eine Regenerierungsphase zum Entfeuchten des Lufttrockners (20),
c) eine Entlastungsphase, die aufrechterhalten wird, bis der Druck der Druckluft unter einen unteren Einschaltdruck gefallen ist, wobei
in einem elektronischen Steuergerät (6) implementierte Steuerroutinen zur Steuerung der Last-, Regenerierungs- und Entlastungsphase durch eine elektromagnetische Ventileinrichtung (8, 10) vorgesehen sind, **dadurch gekennzeichnet, dass** das Bremssteuergerät (6) wenigstens zwei Mikroprozessoren enthält, und die Steuerroutinen zur Steuerung der Last-, Regenerierungs- und Entlastungsphase in dem Bremssteuergerät (6) implementiert sind.

2. Vorrichtung nach Anspruch 1, **dadurch gekennzeichnet, dass** durch die in dem Bremssteuergerät implementierten Steuerroutinen abhängig von Betriebszuständen des Fahrzeugs die Last-, Regenerierungs- und Entlastungsphase steuerbar und/oder der untere Einschaltdruck und/oder der obere Abschaltdruck anpassbar ist, wobei der jeweils vorliegende Betriebszustand durch dem Bremssteuergerät (6) im Rahmen der jeweiligen Bremsfunktion zugeordnete Sensoren (66) wie Bremsdrucksensoren, Raddrehzahlsensoren detektierbar ist.

3. Vorrichtung nach Anspruch 2, **dadurch gekennzeichnet, dass** die elektro-pneumatische Bremseinrichtung eine Bremsschlupfregelung (ABS) umfasst.

4. Vorrichtung nach Anspruch 3, **dadurch gekennzeichnet, dass** das Bremssteuergerät ein ABS-Bremssteuergerät und ausgebildet ist, um von Sensoren der ABS-Bremseinrichtung Daten hinsichtlich einer Aktivierung der Bremsschlupfregelung (ABS) während eines Bremsvorgangs wie ABS-Steuerventilaktivitäten, ABS-Regelfrequenz, Schätzung des Reibwerts zwischen Fahrbahn und Rad zu empfangen und abhängig von diesen Daten die Last-, Regenerierungs- und Entlastungsphase sowie die Anpassung des Einschaltdrucks und des Abschaltdrucks zu steuern.

5. Vorrichtung nach Anspruch 4, **dadurch gekennzeichnet, dass** die in dem Bremssteuergerät (6) implementierten Steuerroutinen ausgebildet sind, um
a) während eines Bremsschlupfregelvorgangs
- die Regenerierungsphase abzubrechen oder zu unterbrechen, und/oder
- die Lastphase zu starten und den oberen Abschaltdruck ausgehend von einem Ausgangswert zu erhöhen,
b) nach Beendigung eines Bremsschlupfregelvorgangs die Regenerierungsphase zu starten.

6. Vorrichtung nach Anspruch 2, **dadurch gekennzeichnet, dass** die elektro-pneumatische Bremseinrichtung ein elektronisches Bremssystem (EBS) wenigstens mit Bremsdruckregelung ist.

7. Vorrichtung nach Anspruch 6, **dadurch gekennzeichnet, dass** das Bremssteuergerät (6) ein EBS-Bremssteuergerät und ausgebildet ist, um von Sensoren des elektronischen Bremssystems (EBS) Daten hinsichtlich einer Aktivierung des elektronischen Bremssystems (EBS) zu empfangen und dass die in dem Bremssteuergerät implementierten Steuerroutinen ausgebildet sind, um
a) während eines Bremsvorgangs die Lastphase zu starten und den Abschaltdruck ausgehend von einem Ausgangswert zu erhöhen, und/oder
b) wenn der Abschaltdruck erreicht und der Bremsvorgang noch andauert, die Regenerierungsphase zu starten.

8. Vorrichtung nach einem der vorhergehenden Ansprüche, **dadurch gekennzeichnet, dass** die elektro-pneumatische Bremseinrichtung mit einem Fahrerassistenzsystem wie ACC (Adaptive Cruise Control) zusammen wirkt und die in dem Bremssteuergerät (6) implementierten Steuerroutinen ausgebildet sind, um die Regenerierungsphase abzubrechen, die Lastphase zu starten und den oberen Abschaltdruck ausgehend von einem Ausgangswert zu erhöhen, falls durch das Fahrerassistenzsystem eine Gefahrensituation detektiert und dem Bremssteuergerät (6) der elektropneumatischen Bremseinrichtung gemeldet wird.

9. Vorrichtung nach einem der vorhergehenden Ansprüche, **dadurch gekennzeichnet, dass** die elektro-pneumatische Ventileinrichtung Magnetventile in Form wenigstens eines Ablasssteuerventils (8) zum pneumatischen Steuern eines Ablassventils (12) sowie eines Regenerationsventils (10) zum Rückleiten von Druckluft aus wenigstens einem Betriebsbremskreis durch den Lufttrockner (20) hindurch durch das geöffnete Ablassventil (12) beinhaltet.

10. Vorrichtung nach einem der vorhergehenden Ansprüche, **dadurch gekennzeichnet, dass** bei einer Fehlfunktion eines der Mikroprozessoren der jeweils andere dies erkennt und eine Warnmeldung ausgibt.

11. Vorrichtung nach einem der vorhergehenden Ansprüche, **dadurch gekennzeichnet, dass** bei einer Fehlfunktion eines der Mikroprozessoren der jeweils andere dies erkennt und die Magnetventile in eine sichere Position schaltet.

12. Vorrichtung nach Anspruch 10, **dadurch gekennzeichnet, dass** die sichere Position der Magnetventile die stromlose ist.

13. Vorrichtung nach einem der Ansprüche 1 bis 9, **dadurch gekennzeichnet, dass** bei einer Fehlfunktion eines der Mikroprozessoren der jeweils andere die Steuerung der Druckluftversorgungs- und Regenerierungseinrichtung (1) übernimmt.

14. Fahrzeug beinhaltend eine Vorrichtung nach einem der vorhergehenden Ansprüche.

## Claims

1. Device for controlling an electro-pneumatic brake device with a brake controller (6) and with a compressor, which takes in atmospheric air, compresses it as compressed air and delivers it to a compressed air supply and regeneration device (1) with an air dryer (20), which receives said compressed air and at least passes it on to at least one operating brake circuit, wherein at least the following phases are provided:
a) A load phase, which is maintained until the pressure of the compressed air has reached an upper shut-off pressure,
b) a regeneration phase for dehumidifying the air dryer (20),
c) a discharge phase, which is maintained until the pressure of the compressed air has decreased to below a lower switch-on pressure, whereby
control routines implemented in an electronic controller (6) are provided for controlling the load, regeneration and discharge phases by means of an electromagnetic valve assembly (8, 10), **characterized in that** the brake controller (6) comprises at least two microprocessors, and the control routines for controlling the load, regeneration and discharge phases are implemented in the brake controller (6).

2. Device according to Claim 1, **characterized in that**, depending on operating states of the vehicle, the load, regeneration and discharge phases can be controlled and/or the lower switch-on pressure and/or the upper shut-off pressure can be adapted by means of the control routines implemented in the brake controller, wherein the respectively present operating state can be detected by sensors (66) associated with the brake controller (6) in the context of the respective brake function, such as brake pressure sensors or wheel revolution rate sensors.

3. Device according to Claim 2, **characterized in that** the electro-pneumatic brake device comprises a brake slip regulation means (ABS).

4. Device according to Claim 3, **characterized in that** the brake controller is an ABS brake controller and is designed to receive from sensors of the ABS brake device data relating to an activation of the brake slip regulation means
(ABS) during a brake process, such as ABS control valve activities, ABS control frequency, estimation of the coefficient of friction between the road and the wheel, and depending on these data to control the load, regeneration and discharge phases and the adaptation of the switch-on pressure and of the shut-off pressure.

5. Device according to Claim 4, **characterized in that** the control routines implemented in the brake controller (6) are designed to
a) during a brake slip control process
- abort or interrupt the regeneration phase, and/or
- start the load phase and to increase the upper shut-off pressure starting from an initial value,
b) start the regeneration phase after finishing a brake slip control process.

6. Device according to Claim 2, **characterized in that** the electro-pneumatic brake device is an electronic brake system (EBS) at least with brake pressure regulation.

7. Device according to Claim 6, **characterized in that** the brake controller (6) is an EBS brake controller and is designed to receive from sensors of the electronic brake system (EBS) data relating to an activation of the electronic brake system (EBS) and that the control routines implemented in the brake controller are designed to
a) start the load phase during a brake process and increase the shut-off pressure starting from an initial value, and/or
b) start the regeneration phase if the shut-off pressure is reached and the brake process is still continuing.

8. Device according to any one of the preceding claims, **characterized in that** the electro-pneumatic brake device works in conjunction with a driver assistance system such as ACC (Adaptive Cruise Control) and the control routines implemented in the brake controller (6) are designed to abort the regeneration phase, to start the load phase and to increase the upper shut-off pressure starting from an initial value, if a hazardous situation is detected by means of the driver assistance system and is notified to the brake controller (6) of the electro-pneumatic brake device.

9. Device according to any one of the preceding claims, **characterized in that** the electro-pneumatic valve device contains magnetic valves in the form of at least one discharge control valve (8) for pneumatic control of a discharge valve (12) and a regeneration valve (10) for carrying compressed air back from at least one operating brake circuit via the air dryer (20) through the open discharge valve (12).

10. Device according to any one of the preceding claims, **characterized in that**, in the event of a fault of one of the microprocessors, the other one detects this and outputs a warning message.

11. Device according to any one of the preceding claims, **characterized in that**, in the event of a fault of one of the microprocessors, the other one detects this and switches the magnetic valves into a safe position.

12. Device according to Claim 10, **characterized in that** the safe position of the magnetic valves is the no-current position.

13. Device according to any one of Claims 1 to 9, **characterized in that**, in the event of a fault of one of the microprocessors, the other one takes over controlling the compressed air supply and regeneration device (1).

14. Vehicle containing a device according to any one of the preceding claims.

## Revendications

1. Dispositif de commande d'un dispositif de freinage électropneumatique comprenant un appareil (6) de commande de freinage ainsi qu'un compresseur, qui reçoit de l'air atmosphérique, le comprime en air comprimé et l'envoie à un dispositif (1) d'alimentation en air comprimé et de régénération ayant un sécheur (20) d'air, lequel reçoit cet air comprimé et l'achemine au moins à au moins un circuit de frein de service, dans lequel il est prévu au moins les phases suivantes :
a) une phase de charge, qui est maintenue jusqu'à ce que la pression de l'air comprimé ait atteint une pression supérieure de déconnexion,
b) une phase de régénération pour déshumidifier le sécheur (20) d'air,
c) une phase de décharge, qui est maintenue jusqu'à ce que la pression de l'air comprimé s'abaisse en dessous d'une pression inférieure de connexion, dans lequel
il est prévu des routines de commande mises en oeuvre dans un appareil (6) de commande électronique pour commander la phase de charge, la phase de régénération et la phase de décharge, par un dispositif (8, 10) de vanne électromagnétique, **caractérisé en ce que** l'appareil (6) de commande de freinage comporte au moins deux microprocesseurs, et les routines de commande sont mises en oeuvre dans l'appareil (6) de commande de freinage pour commander la phase de charge, la phase de régénération et la phase de décharge.

2. Dispositif suivant la revendication 1, **caractérisé en ce que**, par les routines de commande mises en oeuvre dans l'appareil de commande de freinage, on peut, en fonction des états de fonctionnement du véhicule, commander la phase de charge, la phase de régénération et la phase de décharge et/ou adapter la pression inférieure de connexion et/ou la pression supérieure de déconnexion, l'état de fonctionnement présent respectivement pouvant être détecté par l'appareil (6) de commande freinage, dans le cadre de capteurs (66) associés à la fonction de freinage respectif, comme des capteurs de pression de freinage, des capteurs de nombre de tours de roue.

3. Dispositif suivant la revendication 2, **caractérisé en ce que** le dispositif de freinage électropneumatique comprend un contrôle de glissement de freinage (ABS).

4. Dispositif suivant la revendication 3, **caractérisé en ce que** l'appareil de commande de freinage est un appareil de commande de freinage ABS et est constitué pour recevoir, de capteurs du dispositif de freinage ABS, des données concernant une activation du contrôle de glissement de freinage (ABS) pendant une opération de freinage, comme des activités de vanne de commande ABS, une fréquence de régulation ABS, une évaluation du frottement entre la chaussée et la roue et pour, en fonction de ces données, commander la phase de charge, la phase de régénération et la phase de décharge ainsi que l'adaptation de la pression de connexion et de la pression de déconnexion.

5. Dispositif suivant la revendication 4, **caractérisé en ce que** les routines de commande mises en oeuvre dans l'appareil (6) de commande de freinage sont constituées pour,
a) pendant une opération de contrôle du glissement de freinage,
- mettre fin à la phase de régénération ou l'interrompre et/ou
- faire débuter la phase de charge et augmenter la pression supérieure de déconnexion, à partir d'une valeur initiale,
b) après que l'opération de contrôle du glissement de freinage est terminée, faire débuter la phase de régénération.

6. Dispositif suivant la revendication 2, **caractérisé en ce que** le dispositif de freinage électropneumatique est un système de freinage électronique (EBS) ayant au moins une régulation de la pression de freinage.

7. Dispositif suivant la revendication 6, **caractérisé en ce que** l'appareil (6) de commande de freinage est un appareil de commande de freinage EBS et constitué pour recevoir, de capteurs du système (EBS) de freinage électronique, des données concernant une activation du système de freinage électronique (EBS) et **en ce que** les routines de commande mises en oeuvre dans l'appareil de commande de freinage sont constituées pour,
a) pendant une opération de freinage, faire débuter la phase de charge et augmenter la pression de déconnexion à partir d'une valeur initiale et/ou,
b) lorsque la pression de déconnexion est atteinte et alors que l'opération de freinage dure encore, faire débuter la phase de régénération.

8. Dispositif suivant l'une des revendications précédentes, **caractérisé en ce que** le dispositif de freinage électropneumatique coopère avec un système d'assistance à la conduite, comme ACC (Adaptive Cruise Control) et les routines de commande mises en oeuvre dans l'appareil (6) de commande de freinage sont constituées pour mettre fin à la phase de régénération, faire débuter la phase de charge et augmenter la pression supérieure de déconnexion, à partir d'une valeur initiale, si une situation dangereuse et détectée par le système d'assistance à la conduite est indiquée à l'appareil (6) de commande de freinage du dispositif de freinage électropneumatique.

9. Dispositif suivant l'une des revendications précédentes, **caractérisé en ce que** le dispositif de vanne électropneumatique comporte des électrovannes sous la forme d'au moins une vanne (8) de commande d'évacuation pour la commande pneumatique d'une vanne (12) d'évacuation ainsi que d'une vanne (10) de régénération pour renvoyer de l'air comprimé provenant d'au moins un circuit de freinage de service dans le sécheur (20) d'air par la vanne (12) d'évacuation ouverte.

10. Dispositif suivant l'une des revendications précédentes, **caractérisé en ce que**, si l'un des microprocesseurs fonctionne d'une manière défectueuse, l'autre le reconnaît et émet un message d'avertissement.

11. Dispositif suivant l'une des revendications précédentes, **caractérisé en ce que**, si l'un des microprocesseurs fonctionne d'une manière défectueuse, l'autre le reconnaît et met les électrovannes dans une position de sécurité.

12. Dispositif suivant la revendication 10, **caractérisé en ce que** la position de sécurité des électrovannes est la position sans courant.

13. Dispositif suivant l'une des revendications 1 à 9, **caractérisé en ce que**, si l'un des microprocesseurs fonctionne d'une manière défectueuse, l'autre prend en charge la commande du dispositif (1) d'alimentation en air comprimé et de régénération.

14. Véhicule comprenant un dispositif suivant l'une des revendications précédentes.
